# EUROPEAN PATENT SPECIFICATION

(11) **EP 3 794 496 B1**
(45) Date of publication and mention of the grant of the patent: **02.12.2026**
(21) Application number: 19724181.3
(22) Date of filing: 13.05.2019
(51) Int. Cl.: G06K 7/10, G06Q 10/087

(54) **RFID READER DEVICE AND SYSTEM AND METHOD FOR RFID DATA COLLECTION**
RFID-LESEGERÄT SOWIE SYSTEM UND VERFAHREN ZUR RFID-DATENSAMMLUNG
DISPOSITIF DE LECTEUR RFID ET SYSTÈME ET PROCÉDÉ POUR COLLECTE DE DONNÉES RFID

(30) Priority: 14.05.2018 FI 20185439
(43) Date of publication of application: 24.03.2021
(73) Proprietor: Nordic ID OY, 24100 Salo (FI)
(72) Inventor: KARTTUNEN, Mika, 24280 Salo (FI); TUOMELA, Kari, 24240 Salo (FI)
(74) Representative: Heinonen & Co
(86) International application number: PCT/EP2019/062157
(87) International publication number: WO 2019/219576

(56) References cited:
- WO-A1-00/10144
- WO-A2-2014/151935
- US-A1- 2006 267 733

## Description

### FIELD OF THE INVENTION

Generally the present invention relates to RFID readers, systems and methods. In particular, the present invention pertains to RFID readers, systems and methods for RFID data collection.

### BACKGROUND

Today the use of hardware in RFID data collection is really inefficient. Typically a reader is used for a specific process. For example, a warehouse may comprise three different data collection processes, such as goods-in, goods-out and inventory. Additionally, a warehouse may comprise other processes as well.

Usually one reader is reserved for one process. A first reader is reserved for the goods-in process during which the reader scans the goods that enter the warehouse. A second reader is used for the inventory process during which goods are scanned for inventory purposes. A third reader on the other hand is used during the goods-out process during which the goods are scanned when the goods leave the warehouse.

In the same manner antennas are connected to the specific processes. A first antenna is reserved for the goods-in process, a second antenna is reserved for the inventory process and a third antenna is reserved for the goods-out process. If a warehouse (or other facility that comprises RFID data collection processes) has many processes, it will require multiple RFID devices accordingly. Several readers will add costs and consume resources.

A related prior art solution is presented in US 2006/26773 A1, which discloses a hand-held RFID reader capable of operating in a plurality of interrogation modes with the use of plurality of antennas. Further, WO 2014/151935 discloses systems and methods wherein RFID tags and readers can be utilized to implement one or more processes for identifying misplaced or orphaned products. Similarly, WO0010144 A1 discusses handheld RFID devices, and applications thereof wherein the devices and applications may be used in connection with items that are associated with an RFID tag particularly in the context of library materials.

### SUMMARY OF THE INVENTION

The objective is to at least alleviate the problems described hereinabove not satisfactorily solved by the known arrangements, and to provide a feasible device, system and method for allowing flexible data collection. One objective is to provide a device that may be used in multiple different data collection processes. Another objective is to provide a system and method that may allow the use of same devices for a plurality of different data collection, tracking or monitoring setups.

The aforesaid objectives are achieved by the embodiments of a device, system or method in accordance with the present invention.

The aforesaid objectives are achieved according to the present invention as claimed in claim 1.

The aforesaid objectives are achieved according to the present invention as claimed in claim 7.

The aforesaid objectives are achieved according to the present invention as claimed in claim 9.

Accordingly, in one aspect of the present invention a RFID reader device comprising
- a first antenna unit for RF communication with first RFID tags,
- at least one processor for collecting first data of the first RFID tags from the first antenna unit, wherein the at least one processor is configured to process the collected first data in accordance with a first dedicated process,
- a memory for storing the collected first data,
in that the device is configured to communicate with second RFID tags, wherein the at least one processor is configured to collect second data of the second RFID tags, and the at least one processor is configured to process the collected second data in accordance with a second dedicated process, **characterized** in that the at least one processor is configured to change the first or second dedicated process used in data collection with an antenna unit from said first or second dedicated process to the other one of the first or second dedicated processes.

In one embodiment the device comprises a second antenna unit for RF communication with second RFID tags, wherein the at least one processor is configured to collect second data of the second RFID tags from the second antenna unit, and to process the collected second data in accordance with a second dedicated process.

In one embodiment the first dedicated process and second dedicated process are different dedicated processes.

In one embodiment the RFID reader device comprises at least one further antenna unit for RF communication with further RFID tags, wherein the at least one processor is configured to collect further data of the further RFID tags from the further antenna unit(s), and to process the collected further data in accordance with further dedicated process(es).

In one embodiment at least one of the further dedicated processes is a different dedicated process.

In one embodiment the dedicated processes are selected from the group of inventory process, goods-in process, and goods-out process.

In another aspect of the present invention, a system for flexible data collection comprising at least two RFID reader devices for collecting data from RFID tags in that the system comprises
- at least a first and a second RFID reader device, wherein each of the reader comprising
   - a first antenna unit for RF communication with first RFID tags,
   - at least one processor for collecting first data of the first RFID tags from the first antenna unit, wherein the at least one processor is configured to process the collected first data in accordance with a first dedicated process,
   - a memory for storing the collected first data,
   wherein the first and second device is configured to communicate with second RFID tags, wherein the at least one processor is configured to collect second data of the second RFID tags, and to process the collected second data in accordance with a second dedicated process, **characterized** in that the at least one processor is configured to change the first or second dedicated process used in data collection with an antenna unit from said first or second dedicated process to the other one of the first or second dedicated processes.

In one embodiment the first and second device comprises a second antenna unit for RF communication with second RFID tags, wherein the at least one processor is configured to collect second data of the second RFID tags from the second antenna unit, and the at least one processor is configured to process the collected second data in accordance with a second dedicated process.

In a third aspect of the present invention, a method for flexible data collection, in that the method comprises
- configuring at least one RFID reader device to read data of first RFID tags,
- collecting and processing data of the first RFID tags from a first antenna unit according to a first dedicated process,
- configuring the at least one RFID reader device to read data of second RFID tags, and
- collecting and processing data of the second RFID tags according to a second dedicated process,
- **characterized** in that changing the first or second dedicated process used in data collection with an antenna unit from said first or second dedicated process to the other one of the first or second dedicated processes.

In one embodiment the method comprises collecting and processing data of the second RFID tags from a second antenna unit according to a second dedicated process.

In one embodiment the method further comprises changing the dedicated process used in data collection with a defined antenna unit from one dedicated process to another, different dedicated process.

In one embodiment the at least one RFID reader device comprises at least two antenna units for collecting and processing data according to at least two different dedicated processes respectively.

In one embodiment the dedicated processes are selected from the group of inventory process, goods-in process, and goods-out process.

The utility of the present invention follows from a plurality of factors depending on each particular embodiment.

Embodiments of the invention may enable flexible way of data collection from one or multiple readers. Operation may be allocated to one or several antennas. Antenna aggregation may be spanned over multiple readers. One reader may process multiple collection processes. For example, one reader may handle inventory, goods out and goods in process. Simultaneous processes may only be limited by number of antennas attached to entire system. Antenna process may be changed by changing system configuration. System may enable easy data flow from reader to cloud or local data storage.

Embodiments of the invention may allow readers and antennas to be utilized effectively. Embodiments may enable a straight forward way to establish data collection system. Embodiments of the invention may lower the bar significantly to start using RFID. Some embodiments may make transition easier from barcode to RFID.

The expression "a number of" refers herein to any positive integer starting from one (1), e.g. to one, two, or three.

The expression "a plurality of" refers herein to any positive integer starting from two (2), e.g. to two, three, or four.

Different embodiments of the present invention are disclosed in the dependent claims.

### BRIEF DESCRIPTION OF THE RELATED DRAWINGS

Next the invention is described in more detail with reference to the appended drawings in which
Fig. 1 illustrates an embodiment of a device in accordance with the present invention.
Fig. 2 illustrates a second embodiment of a device in accordance with the present invention.
Fig. 3 illustrates a block diagram of an embodiment of a device in accordance with the present invention.
Fig. 4 illustrates an embodiment of a system in accordance with the present invention.
Fig. 5 illustrates a second embodiment of a system in accordance with the present invention.
Fig. 6 is a flow diagram of an embodiment of a method in accordance with the present invention.

### DETAILED DESCRIPTION OF THE EMBODIMENTS

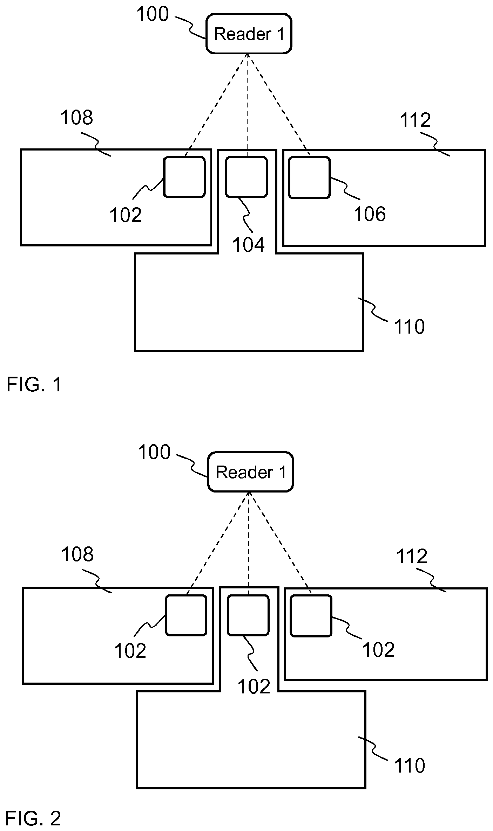

Referring to figure 1, a RFID reader device 100 comprises three antenna units 102, 104, 106 for RF communication with RFID tags. The RFID reader device 100 collects the data from the RFID tags and processes the data in accordance with dedicated processes.

In figure 1 is illustrated, wherein the reader device 100 collects data of first RFID tags from a first antenna unit 102 and processes the data in accordance with a goods-in process 108. The same RFID reader device collects data of second RFID tags from a second antenna unit 104 and processes the data in accordance with an inventory process 110. Further, the reader device 100 collects data of third RFID tags from a third antenna unit 106 and processes the data in accordance with a goods-out process 112.

The first, second and third RFID tags may be the same tags at different times, or the first, second and third RIFD tags may be different tags. For example, goods marked with RFID tags may enter a warehouse and data is collected and processed from the tags in accordance with the goods-in process. The same goods with the same RFID tags may move along in the warehouse and data is collected and processed at a later stage in accordance with an inventory process. Further, the same goods and RFID tags may continue the journey and at a later stage the data may be collected and processed in accordance with a goods-out process. In this example, the same RFID tags are considered as first, second or third RFID tags depending on the dedicated data processes at different times, i.e. the goods-in, inventory or goods-out process.

In figure 2, the RFID reader device collects data from a first antenna unit 102 and processes the data in accordance with three different processes, i.e. the goods-in process 108, the inventory process 110 and the goods-out process 112. In order to use the same antenna 102 for multiple different processes, the device is reconfigured between the processes. The RFID reader device may comprise a control entity comprising an application programming interface (API) for allowing reconfiguration over a network, such as the Internet, and/or the control entity may, for example, in a timed mode reconfigure the dedicated process.

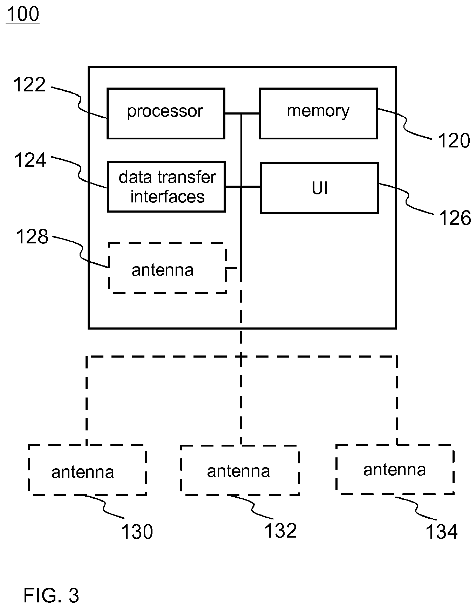

Figure 3 represents a block diagram of the main components of reader device 100. The reader device comprises memory 120 and processors 122 for storing and processing data. The reader device comprises data transfer interfaces 124 such as Ethernet, USB, WLAN and/or wireless radios (e.g. 3G, LTE, LoRa). The reader device comprises a user interface (UI) 126, which may include LEDs for illustrating e.g. power, RFID on, RFID read and communication. The reader device may include a buzzer for sound indications, and light sensor and/or tapping sensor, or any other activation method, for triggering reading. Additionally or alternatively, the reader device may include buttons and/or a display for user input and output.

The reader device 100 comprises one internal antenna unit 128 and ports for three external antenna units 130, 132, 134. Alternatively, the device may comprise a plurality of internal antenna units such as two, three or five antenna units. Further, alternatively, the reader device may not comprise any internal antenna units at all. Further, alternatively, the reader device may comprise more ports for external antenna units such as 5, 10 or 15 ports, or the device may comprise fewer ports such as 1 or 2.

Preferably, the reader device 100 is a mobile RFID reader device. The RFID reader device may be referred to as "intelligent" or "smart" RFID reader device.

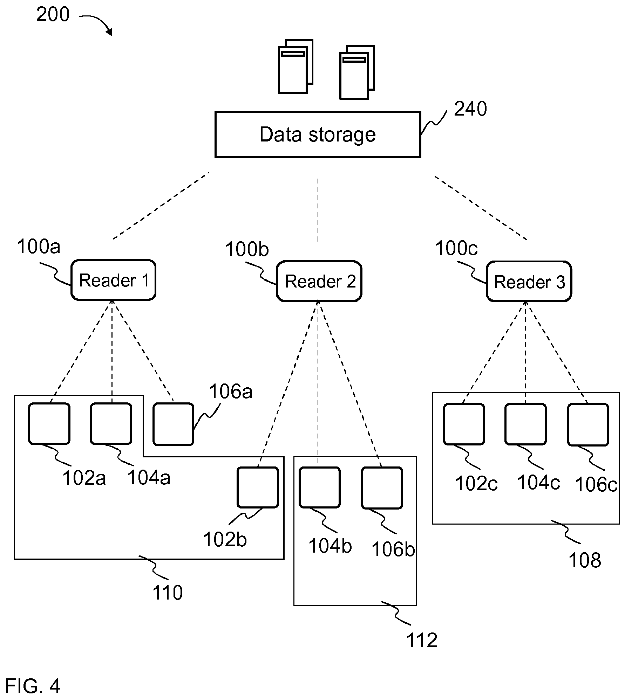

Referring to figure 4, the system 200 for RFID data collection comprises a first reader device 100a, a second reader device 100b and a third reader device 100c.

The first reader device 100a comprises three antenna units 102a, 104a, 106a, the second reader device 100b comprises three antenna units 102b, 104b, 106b, and the third reader device 100c comprises three antenna units 102c, 104, 106c for RF communication with RFID tags. The antenna units may be internal or external antenna units.

The first reader device 100a collects RFID data from two antenna units, 102a and 104a, for the inventory process 110. The second reader device 100b collects RFID data from all three antenna units 102b, 104b, 106b. However, the second reader device 100b collects data from one antenna unit, 102b, for the inventory process, and collects data from two antenna units 104b, 106b for the goods-out process 112. The third reader device 100c collects RFID data from all three antenna units 102c, 104c, 106c, for the goods-in process 108.

Alternatively, a number of reader devices in the system may be "dumb" and the processing takes place in the smart reader devices instead. For example, the second reader device 100b may be a "dumb" reader device and the first reader device 100a processes the data according to the inventory process 110 and the goods-out process 112.

The data may be further transmitted to local or remote servers 240 and/or terminals for data storage and/or processing.

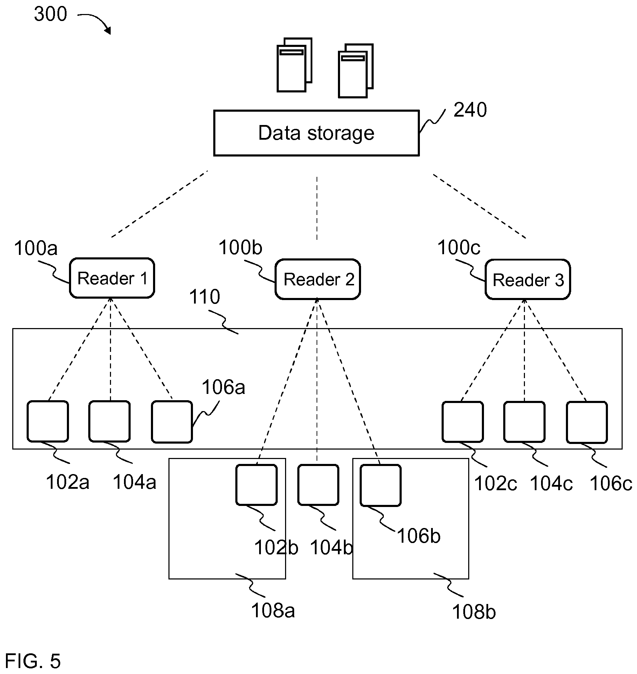

In figure 5, the system 300 may comprise the same reader devices 100a, 100b, 100c and antenna units 102a-c, 104a-c, 106a-c, as in figure 4. The reader devices may be reconfigured so that the dedicated processes used in data collection with a defined antenna unit is changed from one dedicated process to another different dedicated process.

In figure 5, the first reader device 100a collects RFID data from all three antenna units 102a, 104a, 106a for the inventory process 110. Additionally, the third reader device 100c collects RFID data from all three antennas 102c, 104c, 106c for the inventory process 110. The second reader device 100b collects RFID data from one antenna unit 102b for a first goods-in process 108a. The second reader device collects **RFID** data from another antenna unit 106b for a second goods-in process 108b.

For example, a warehouse may comprise multiple data collection processes such as a goods-in process, an inventory process and a goods-out process. During the goods-in data collection process the products are scanned when entering the warehouse. During the inventory data collection process products that have entered the warehouse may be scanned for warehouse inventory. When the products leave the warehouse, the products may be scanned during a goods-out data collection process.

Additionally, a warehouse may comprise other data collection processes with the goods-in, inventory and goods-out processes. Alternatively, not all of the three processes must be present in an embodiment of the invention.

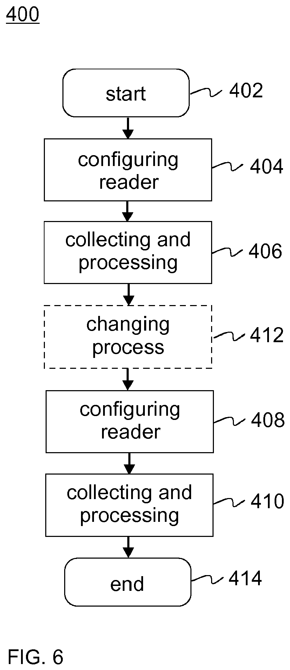

Figure 6 is a flow diagram of an embodiment of a method 400 in accordance with the present invention.

At method start-up 402, preparatory actions may take place. The step may include setting up RFID reader devices and other parts needed to execute the method.

At 404, at least one RFID reader device is configured to read first data of first RFID tags.

At 406, the data of the first RFID tags from a first antenna unit is collected and processed according to a first dedicated process.

At 408, the at least one RFID reader device is configured to read data of second RFID tags. The step may include configuring the device to collect and process second data of second RFID tags from a second antenna unit.

At 410, the data of the second RFID tags are collected and processed according to a second dedicated process. The step may include collecting and processing data from a second antenna unit.

At 412, the dedicated process used in data collection with a defined antenna unit is changed from one dedicated process to another, different dedicated process. Step 412 may take place between the steps 406 and 408. Alternatively or additionally, the step may take place after step 410.

At 414, the method execution is ended.

Consequently, a skilled person may on the basis of this disclosure and general knowledge apply the provided teachings in order to implement the scope of the present invention as defined by the appended claims in each particular use case with necessary modifications, deletions, and additions.

## Claims

1. A RFID reader device (100) comprising
- a first antenna unit (102) for RF communication with first RFID tags,
- at least one processor (122) for collecting first data of the first RFID tags from the first antenna unit (102), wherein the at least one processor (122) is configured to process the collected first data in accordance with a first dedicated process,
- a memory (120) for storing the collected first data,
in that the device is configured to communicate with second RFID tags, wherein the at least one processor (122) is configured to collect second data of the second RFID tags, and the at least one processor (122) is configured to process the collected second data in accordance with a second dedicated process, **characterized in that** the at least one processor (122) is configured to change the first or second dedicated process used in data collection with an antenna unit from said first or second dedicated process to the other one of the first or second dedicated processes.

2. The RFID reader device (100) of claim 1, wherein the device comprises a second antenna unit (104) for RF communication with second RFID tags, wherein the at least one processor (122) is configured to collect second data of the second RFID tags from the second antenna unit (104), and the at least one processor (122) is configured to process the collected second data in accordance with the second dedicated process.

3. The RFID reader device (100) of claim 1, wherein the first dedicated process and second dedicated process are different dedicated processes.

4. The RFID reader device (100) of claim 1, wherein the RFID reader device comprises at least one further antenna unit for RF communication with further RFID tags, wherein the at least one processor (122) is configured to collect further data of the further RFID tags from the further antenna unit(s), and to process the collected further data in accordance with further dedicated process(es).

5. The RFID reader device (100) of claim 4, wherein at least one of the further dedicated processes is a different dedicated process from the first and second dedicated processes.

6. The RFID reader device (100) of claim 1, wherein the first and second dedicated processes are selected from the group of inventory process (110), goods-in process (108), and goods-out process (112).

7. A system for flexible data collection comprising at least two RFID reader devices (100) for collecting data from RFID tags in that the system comprises
- at least a first and a second RFID reader device (100), wherein each of the reader comprising
- a first antenna unit (102) for RF communication with first RFID tags,
- at least one processor (122) for collecting first data of the first RFID tags from the first antenna unit (102), wherein the at least one processor (122) is configured to process the collected first data in accordance with a first dedicated process,
- a memory (120) for storing the collected first data,
wherein the first and second device is configured to communicate with second RFID tags, wherein the at least one processor (122) is configured to collect second data of the second RFID tags, and to process the collected second data in accordance with a second dedicated process, **characterized in that** the at least one processor (122) is configured to change the first or second dedicated process used in data collection with an antenna unit from said first or second dedicated process to the other one of the first or second dedicated processes.

8. A system of claim 7, wherein the first and second device comprises a second antenna unit (104) for RF communication with second RFID tags, wherein the at least one processor (122) is configured to collect second data of the second RFID tags from the second antenna unit (104), and the at least one processor (122) is configured to process the collected second data in accordance with the second dedicated process.

9. A method for flexible data collection, in that the method comprises
- configuring at least one RFID reader device (100) to read data of first RFID tags,
- collecting and processing data of the first RFID tags from a first antenna unit (102) according to a first dedicated process,
- configuring the at least one RFID reader device (100) to read data of second RFID tags, and
- collecting and processing data of the second RFID tags according to a second dedicated process,
- **characterized in that** changing the first or second dedicated process used in data collection with an antenna unit from said first or second dedicated process to the other one of the first or second dedicated processes.

10. The method of claim 9, comprising collecting and processing data of the second RFID tags from a second antenna unit (104) according to the second dedicated process.

## Patentansprüche

1. RFID-Lesegerät (100), welches Folgendes umfasst:
- eine erste Antenneneinheit (102) für die HF-Kommunikation mit ersten RFID-Tags,
- mindestens einen Prozessor (122) zum Erfassen erster Daten der ersten RFID-Tags von der ersten Antenneneinheit (102), wobei der mindestens eine Prozessor (122) zum Verarbeiten der erfassten ersten Daten in Übereinstimmung mit einem ersten dedizierten Prozess konfiguriert ist,
- einen Speicher (120) zum Speichern der erfassten ersten Daten,
wobei das Gerät zum Kommunizieren mit zweiten RFID-Tags konfiguriert ist, wobei der mindestens eine Prozessor (122) zum Erfassen zweiter Daten der zweiten RFID-Tags konfiguriert ist und der mindestens eine Prozessor (122) zum Verarbeiten der erfassten zweiten Daten in Übereinstimmung mit einem zweiten dedizierten Prozess konfiguriert ist, **dadurch gekennzeichnet, dass** der mindestens eine Prozessor (122) zum Ändern des ersten oder zweiten dedizierten Prozesses, der bei der Datenerfassung mit einer Antenneneinheit verwendet wird, von dem ersten oder zweiten dedizierten Prozess zum jeweils anderen aus dem ersten oder zweiten dedizierten Prozess konfiguriert ist.

2. RFID-Lesegerät (100) nach Anspruch 1, wobei das Gerät eine zweite Antenneneinheit (104) für die HF-Kommunikation mit zweiten RFID-Tags umfasst, wobei der mindestens eine Prozessor (122) zum Erfassen zweiter Daten der zweiten RFID-Tags von der zweiten Antenneneinheit (104) konfiguriert ist und der mindestens eine Prozessor (122) zum Verarbeiten der erfassten zweiten Daten in Übereinstimmung mit dem zweiten dedizierten Prozess konfiguriert ist.

3. RFID-Lesegerät (100) nach Anspruch 1, wobei der erste dedizierte Prozess und der zweite dedizierte Prozess unterschiedliche dedizierte Prozesse sind.

4. RFID-Lesegerät (100) nach Anspruch 1, wobei das RFID-Lesegerät mindestens eine weitere Antenneneinheit für die HF-Kommunikation mit weiteren RFID-Tags umfasst, wobei der mindestens eine Prozessor (122) zum Erfassen weiterer Daten der weiteren RFID-Tags von der (den) weiteren Antenneneinheit(en) und zum Verarbeiten der erfassten weiteren Daten in Übereinstimmung mit (einem) weiteren dedizierten Prozess(en) konfiguriert ist.

5. RFID-Lesegerät (100) nach Anspruch 4, wobei mindestens einer der weiteren dedizierten Prozesse ein unterschiedlicher dedizierter Prozess zu dem ersten und dem zweiten dedizierten Prozess ist.

6. RFID-Lesegerät (100) nach Anspruch 1, wobei der erste und der zweite dedizierte Prozess ausgewählt sind aus der Gruppe von Inventurprozess (110), Wareneingangsprozess (108) und Warenausgangsprozess (112).

7. System zur flexiblen Datenerfassung, welches mindestens zwei RFID-Lesegeräte (100) zum Erfassen von Daten von RFID-Tags umfasst, wobei das System Folgendes umfasst:
- mindestens ein erstes und ein zweites RFID-Lesegerät (100), wobei jedes der Lesegeräte Folgendes umfasst:
- eine erste Antenneneinheit (102) für die HF-Kommunikation mit ersten RFID-Tags,
- mindestens einen Prozessor (122) zum Erfassen erster Daten der ersten RFID-Tags von der ersten Antenneneinheit (102), wobei der mindestens eine Prozessor (122) zum Verarbeiten der erfassten ersten Daten in Übereinstimmung mit einem ersten dedizierten Prozess konfiguriert ist,
- einen Speicher (120) zum Speichern der erfassten ersten Daten,
wobei das erste und das zweite Gerät zum Kommunizieren mit zweiten RFID-Tags konfiguriert sind, wobei der mindestens eine Prozessor (122) zum Erfassen zweiter Daten der zweiten RFID-Tags und zum Verarbeiten der erfassten zweiten Daten in Übereinstimmung mit einem zweiten dedizierten Prozess konfiguriert ist, **dadurch gekennzeichnet, dass** der mindestens eine Prozessor (122) zum Ändern des ersten oder zweiten dedizierten Prozesses, der bei der Datenerfassung mit einer Antenneneinheit verwendet wird, von dem ersten oder zweiten dedizierten Prozess zum jeweils anderen aus dem ersten oder zweiten dedizierten Prozess konfiguriert ist.

8. System nach Anspruch 7, wobei das erste und das zweite Gerät eine zweite Antenneneinheit (104) für die HF-Kommunikation mit zweiten RFID-Tags umfassen, wobei der mindestens eine Prozessor (122) zum Erfassen zweiter Daten der zweiten RFID-Tags von der zweiten Antenneneinheit (104) konfiguriert ist und der mindestens eine Prozessor (122) zum Verarbeiten der erfassten zweiten Daten in Übereinstimmung mit dem zweiten dedizierten Prozess konfiguriert ist.

9. Verfahren zur flexiblen Datenerfassung, wobei das Verfahren Folgendes umfasst:
- Konfigurieren mindestens eines RFID-Lesegerätes (100) zum Lesen von Daten erster RFID-Tags,
- Erfassen und Verarbeiten von Daten der ersten RFID-Tags von einer ersten Antenneneinheit (102) gemäß einem ersten dedizierten Prozess,
- Konfigurieren des mindestens einen RFID-Lesegerätes (100) zum Lesen von Daten zweiter RFID-Tags, und
- Erfassen und Verarbeiten von Daten der zweiten RFID-Tags gemäß einem zweiten dedizierten Prozess,
- **gekennzeichnet durch** das Ändern des ersten oder zweiten dedizierten Prozesses, der bei der Datenerfassung mit einer Antenneneinheit verwendet wird, von dem ersten oder zweiten dedizierten Prozess zum jeweils anderen aus dem ersten oder zweiten dedizierten Prozess.

10. Verfahren nach Anspruch 9, welches das Erfassen und Verarbeiten von Daten der zweiten RFID-Tags von einer zweiten Antenneneinheit (104) gemäß dem zweiten dedizierten Prozess umfasst.

## Revendications

1. Dispositif lecteur RFID (100) comprenant :
- une première unité d'antenne (102) pour une communication RF avec des premières étiquettes RFID,
- au moins un processeur (122) pour collecter des premières données des premières étiquettes RFID à partir de la première unité d'antenne (102), dans lequel l'au moins un processeur (122) est configuré pour traiter les premières données collectées selon un premier processus dédié,
- une mémoire (120) pour stocker les premières données collectées,
le dispositif étant configuré pour communiquer avec des deuxièmes étiquettes RFID, dans lequel l'au moins un processeur (122) est configuré pour collecter des deuxièmes données des deuxièmes étiquettes RFID, et l'au moins un processeur (122) est configuré pour traiter les deuxièmes données collectées selon un deuxième processus dédié, **caractérisé en ce que** l'au moins un processeur (122) est configuré pour changer l'un du premier ou deuxième processus dédié utilisé pour la collecte de données avec une unité d'antenne à partir dudit premier ou deuxième processus dédié à l'autre du premier ou deuxième processus dédié.

2. Dispositif lecteur RFID (100) selon la revendication 1, dans lequel le dispositif comprend une deuxième unité d'antenne (104) pour une communication RF avec des deuxièmes étiquettes RFID, dans lequel l'au moins un processeur (122) est configuré pour collecter des deuxièmes données des deuxièmes étiquettes RFID à partir de la deuxième unité d'antenne (104), et l'au moins un processeur (122) est configuré pour traiter les deuxièmes données collectées selon le deuxième processus dédié.

3. Dispositif lecteur RFID (100) selon la revendication 1, dans lequel le premier processus dédié et le deuxième processus dédié sont des processus dédiés différents.

4. Dispositif lecteur RFID (100) selon la revendication 1, dans lequel le dispositif lecteur RFID comprend au moins une autre unité d'antenne pour une communication RF avec d'autres étiquettes RFID, dans lequel l'au moins un processeur (122) est configuré pour collecter d'autres données des autres étiquettes RFID à partir de l'au moins une autre unité d'antenne, et pour traiter les autres données collectées selon un ou plusieurs autres processus dédiés.

5. Dispositif lecteur RFID (100) selon la revendication 4, dans lequel au moins un des autres processus dédiés est un processus dédié différent des premier et deuxième processus dédiés.

6. Dispositif lecteur RFID (100) selon la revendication 1, dans lequel les premier et deuxième processus dédiés sont sélectionnés dans le groupe constitué d'un processus d'inventaire (110), d'un processus d'entrée de marchandises (108) et d'un processus de sortie de marchandises (112).

7. Système de collecte flexible de données comprenant au moins deux dispositifs lecteurs RFID (100) pour collecter des données à partir d'étiquettes RFID, le système comprenant :
- au moins des premier et deuxième dispositifs lecteurs RFID (100), chacun d'eux comprenant :
- une première unité d'antenne (102) pour une communication RF avec des premières étiquettes RFID,
- au moins un processeur (122) pour collecter des premières données des premières étiquettes RFID à partir de la première unité d'antenne (102), dans lequel l'au moins un processeur (122) est configuré pour traiter les premières données collectées selon un premier processus dédié,
- une mémoire (120) pour stocker les premières données collectées,
dans lequel les premier et deuxième dispositifs sont configurés pour communiquer avec des deuxièmes étiquettes RFID, dans lequel l'au moins un processeur (122) est configuré pour collecter des deuxièmes données des deuxièmes étiquettes RFID, et pour traiter les deuxièmes données collectées selon un deuxième processus dédié, **caractérisé en ce que** l'au moins un processeur (122) est configuré pour changer l'un du premier ou deuxième processus dédié utilisé pour la collecte de données avec une unité d'antenne à partir dudit premier ou deuxième processus dédié à l'autre du premier ou deuxième processus dédié.

8. Système selon la revendication 7, dans lequel les premier et deuxième dispositifs comprennent une deuxième unité d'antenne (104) pour une communication RF avec des deuxièmes étiquettes RFID, dans lequel l'au moins un processeur (122) est configuré pour collecter des deuxièmes données des deuxièmes étiquettes RFID à partir de la deuxième unité d'antenne (104), et l'au moins un processeur (122) est configuré pour traiter les deuxièmes données collectées selon le deuxième processus dédié.

9. Procédé de collecte flexible de données, le procédé comprenant :
- la configuration d'au moins un dispositif lecteur RFID (100) pour lire des données de premières étiquettes RFID,
- la collecte et le traitement de données des premières étiquettes RFID à partir d'une première unité d'antenne (102) selon un premier processus dédié,
- la configuration de l'au moins un dispositif lecteur RFID (100) pour lire des données de deuxièmes étiquettes RFID, et
- la collecte et le traitement de données des deuxièmes étiquettes RFID selon un deuxième processus dédié,
- **caractérisé par** le changement de l'un du premier ou deuxième processus dédié utilisé pour la collecte de données avec une unité d'antenne à partir dudit premier ou deuxième processus dédié à l'autre du premier ou deuxième processus dédié.

10. Procédé selon la revendication 9, comprenant la collecte et le traitement de données des deuxièmes étiquettes RFID à partir d'une deuxième unité d'antenne (104) selon le deuxième processus dédié.
